# EUROPÄISCHE PATENTSCHRIFT

(11) **EP 2 019 026 B1**
(45) Veröffentlichungstag und Bekanntmachung des Hinweises auf die Patenterteilung: **17.11.2010**
(21) Anmeldenummer: 08075665.3
(22) Anmeldetag: 25.07.2008
(51) Int. Cl.: B62D 25/14

(54) **Integrierte Center-Verstärkung**
Integrated centre reinforcement
Renforcement central intégré

(30) Priorität: 26.07.2007 DE 102007035382; 25.01.2008 DE 102008006936; 26.07.2007 DE 102007035383
(43) Veröffentlichungstag der Anmeldung: 28.01.2009
(73) Patentinhaber: Faurecia Innenraum Systeme GmbH, 76767 Hagenbach (DE)
(72) Erfinder: Gavrilov, Christo, 80636 München (DE); Braun, Marco, 76848 Lug (DE); Kober, Steve, 08233 Treuen (DE); Doll, Volker, 76829 Ranschbach (DE)
(74) Vertreter: Pfenning, Meinig & Partner GbR

(56) Entgegenhaltungen:
- DE-A1- 10 317 900
- DE-A1-102006 040 032
- US-A- 5 823 602
- US-A1- 2004 145 208

## Beschreibung

Die Erfindung betrifft eine Verstärkung einer Aufnahme von Bedien- und Anzeigegeräten in der Mittelkonsole eines selbsttragenden Instrumentenpaneels.

Nach dem Stand der Technik werden tragende Strukturen für Instrumente und Anzeigegeräte aus separaten Bauteilen gefertigt, die meist aus hochwertigen Materialien gefertigt sind. Das hochwertige Material (beispielsweise ein Aluminium- oder Magnesiumrahmen oder auch ein hochwertiger Kunststoff) und ein zusätzlicher Verschweißschritt führen zu höheren Bauteilkosten.

Instrumententafeln bzw. Verfahren zu deren Herstellung sind beispielsweise aus den Druckschriften DE 103 17 900 A1, siehe Oberbegriff des vorliegenden Anspruchs 9, US 2004/145208 A1, DE 10 2006 040 032 A1 und US 5,823,602 A entnehmbar. Sämtlichen Gegenständen bzw. Verfahren ist jedoch gemein, dass eine Vielzahl von Teilen in zahlreichen Arbeitsschritten zusammengesetzt werden muss.

Aufgabe der vorliegenden Erfindung ist es daher, eine Lösung anzugeben, mit der eine Aufnahme für Geräte vorzugsweise in der Mittelkonsole eines selbsttragenden Instrumentenpaneels kostengünstig und mit wenigen Arbeitsschritten realisiert werden kann. Diese Aufgabe wird gelöst durch die Gegenstände der unabhängigen Patentansprüche.

Die vorliegende Erfindung betrifft zunächst ein Verfahren zum Herstellen einer Instrumententafel, wobei
a) eine Rahmenstruktur in einem einzigen Spritzgussprozess erzeugt wird und diese Rahmenstruktur linienförmige Elemente aufweist, die bereichsweise mit Kunststoffplattenelementen verschlossen sind, und die Rahmenstruktur die Kunststoffplattenelemente aufweist, welche mit den linienförmigen Elementen stoffschlüssig verbunden sind, und
   die linienförmigen Elemente auf ihrer einem späteren Kraftfahrzeuginnenraum abgewandten Seite Versteifungsrippen aufweisen und
   die Rahmenstruktur zumindest ein rahmenförmiges Halteelement enthält und dieses rahmenförmige Halteelement eine Öffnung zur Aufnahme von einsetzbaren elektronischen Geräten aufweist und
b) das elektronische Gerät in das rahmenförmige Halteelement eingesetzt wird.

Die Rahmenstruktur besteht aus linienförmigen Elementen, die bereichsweise mit Kunststoffplattenelementen verschlossen sind, wobei linienförmige Elemente und Kunststoffplattenelemente in einem einzigen, z.B. Spritzgussprozess, herstellbar sind. Es ist zwar möglich, dass die linienförmigen Elemente hierbei einen Kern aus einem anderen Material (etwa Metall oder lang gestreckten Faserbündeln) haben, vorzugsweise besteht die Rahmenstruktur jedoch aus einem einzigen Material, wobei die Verstärkung im Bereich der linienförmigen Elemente dann dadurch erreicht wird, dass diese auf der dem späteren Kraftfahrzeuginnenraum vorzugsweise abgewandten Seite Versteifungsrippen aufweisen, insbesondere Kreuzverstärkungen, bienenwabenförmige Versteifungen etc.

Wichtig ist hierbei, dass das Halteelement, in welches elektronische Geräte unmittelbar eingesetzt werden können, von vornherein integraler Bestandteil der Rahmenstruktur ist.

Hierdurch wird zum einen die Gesamtstabilität der Rahmenstruktur bzw. der Instrumententafel weiter erhöht, da hier ein zusätzliches versteifendes Bauteil gegeben ist.

Andererseits wird vor allem die Herstellung einer erfindungsgemäßen Instrumententafel erleichtert und die Produktionskosten werden gesenkt. Das Einfügen des Halteelements geschieht integral, d.h. in einem einzigen z.B. Spritzgussprozess mit der Herstellung der übrigen Elemente der Trägerstruktur. Es ist daher nicht notwendig, nachträglich einen entsprechenden Rahmen anzuschweißen, wobei die Schnittstelle hier eine mögliche Bruchstelle darstellt. Außerdem wird durch die "integrale" Bauweise die Herstellung verbilligt, da keine kostenaufwendigen Zusatzteile aus Metallen oder einem hochwertigen Kunststoff angefügt werden müssen, hier sind außerdem Kompatibilitätsprobleme zu lösen. Schließlich ist auch die Toleranzkette verkürzt, wodurch sich die Geräte besser einpassen lassen und sich auch ein saubereres Fugenbild ergibt.

Mit der Erfindung wird erreicht, dass die Geräte einfach nur in die Rahmenstruktur der Instrumententafel eingeschoben werden müssen und keine weiteren Zusatzbauteile notwendig sind.

Eine vorteilhafte Ausbildung sieht vor, dass das einzuführende Gerät ein Autoradio, ein Navigationsgerät oder ein Head-up-Display ist. Dabei werden die meisten Geräte in die Mittelkonsole eines Kraftfahrzeuges eingesetzt, beim Head-up-Display kommt es zu einem Einsetzen des Geräts von oben, so dass eine Projektion von Fahrerinformationen auf die Windschutzscheibe möglich wird.

Eine besonders vorteilhafte Weiterbildung sieht vor, dass vor dem Einsetzen des elektronischen Geräts die Rahmenstruktur mit einer Dekorschicht belegt wird. Diese Dekorschicht kann aus Leder oder Kunststoff bestehen und beispielsweise mit der Rahmenstruktur unmittelbar verklebt werden.

Es ist allerdings auch möglich, dass die Rahmenstruktur, die vorzugsweise flächige Kunststoffplattenelemente enthält, durch Verschäumen mit einer Dekorschicht versehen wird.

Hierzu wird beispielsweise eine Haut aus Kunststoff (beispielsweise eine Slush-Haut) in ein erste Werkzeughälfte eingesetzt und die Rahmenstruktur in eine korrespondierende zweite Werkzeughälfte. Der Zwischenraum zwischen Rahmenstruktur und Dekorschicht wird dann mit einem Schaum (beispielsweise durch Aufschäumen von Polyol und Isozyanat) ausgeschäumt. Alternativ ist es jedoch auch möglich, eine Dekorschicht aufzubringen, die eine Unterschicht aus Schaum aufweist (Schaumfolie).

Vorteilhaft ist auch, dass der Verschnitt bei der Weiterverarbeitung der Rahmenstruktur vermindert werden kann.

Beispielsweise ist die Dekorschicht beim Einlegen in das erste Werkzeugteil im Bereich der Öffnung des späteren Halteelements durchgehend. Im zweiten Werkzeugteil ist in diesem Halteelement allerdings schon die endgültige Öffnung enthalten. Nach dem Verschäumen muss zum Beschnitt dann allenfalls noch die Dekorschicht ausgeschnitten werden und nicht mehr darunter liegende Teile der Rahmenstruktur, hierdurch ergibt sich zum einen weniger Abfall, zum anderen ist der Beschnittprozess weniger aufwendig, außerdem können die Kanten der Rahmenstruktur durch eine entsprechend überstehende Dekorschicht geschützt werden. Hierdurch wird auch ermöglicht, dass sichtseitig im Fugenbereich um die Geräte herum lediglich Dekorschicht zu sehen ist.

Vorzugsweise werden die elektronischen Geräte so eingesetzt wird, dass diese randseitig die Dekorschicht, zumindest abschnittsweise, überdecken.

Vorzugsweise ist das Halteelement gegenüber der einem Kraftfahrzeuginnenraum zuordenbaren Front der Instrumententafel zurückversetzt. Hierdurch wird eine flächige Anordnung des Vorderteils des einzusetzenden Geräts mit der übrigen Instrumententafel ermöglicht. Hierbei ist in der Regel, zumindest bereichsweise, zwischen und anschließenden Abschnitten der Instrumententafel (d.h. Teilen des Rahmenträgers und/oder einer darüber liegenden Dekorschicht) eine Fuge vorgesehen. Insbesondere durch die "integrale" Bauweise und die dadurch verkürzte Toleranzkette ist es möglich, diese Fuge sehr gleichmäßig zu gestalten, da hier weder Anbauteile noch zwischengeschaltete Teile zur Montage nötig sind.

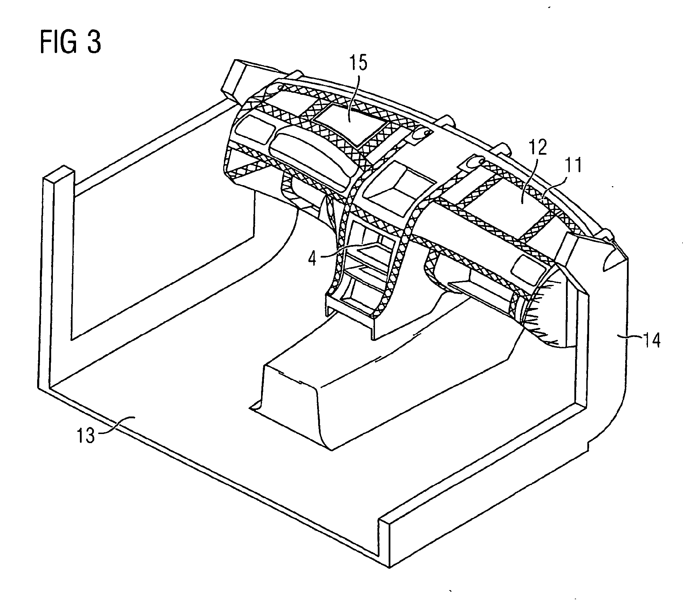

Das Halteelement selbst kann verschiedene Bauformen aufweisen. Zum einen ist eine "quaderförmige" Ausführung möglich, die eine besonders gut versteifende Wirkung hat (siehe beispielsweise Fig. 3).

Es ist allerdings auch möglich, dass das Halteelement lediglich einen (vorzugsweise geschlossenen) vorderen Rahmen mit einer darin befindlichen Öffnung aufweist und dass an diesen Rahmen nach hinten anschließend z.B. dreieckförmige Elemente vorgesehen sind, in die die Geräte eingeschoben werden können. Hierbei kann das Halteelement auch bereits Rastungen aufweisen, beispielsweise können die nach hinten stehenden Teile (Zungen) leicht elastisch ausgebildet sein, so dass durch ein leichtes Auseinanderdrücken dieser Elemente, jeweils zur Außenseite hin, das Einschnappen eines entsprechenden Geräts möglich ist.

Dies hat den Vorteil, dass keine weiteren Montageelemente nötig sind, beispielsweise zusätzliche Schrauben. Vorteilhaft ist auch, dass keine zwischengeschalteten Bauteile, etwa Zwischenrahmen, notwendig sind, das entsprechende Gerät kann unmittelbar in das Halteelement eingerastet werden, es ist kein Einbaurahmen etc. nötig.

Die erfindungsgemäße Instrumententafel zeichnet sich insbesondere dadurch aus, dass einerseits die Rahmenstruktur der Instrumententafel unmittelbar mit einer Dekorschicht durch Verkleben oder Beschäumen verbunden ist und die Rahmenstruktur andererseits unmittelbar mit dem Kraftfahrzeug verbindbar ist und die Stabilität der Rahmenstruktur der Instrumententafel derart gestaltet ist, dass ein gesonderter, über die gesamte Fahrzeugbreite eines Kraftfahrzeugs verlaufender Querträger verzichtbar ist. Hierdurch wird erreicht, dass die Instrumententafel sowohl dekorative als auch tragende Funktionen wahrnimmt und nicht mehrere Bauteile (beispielsweise verschiedene Schalen mit unterschiedlichen Stabilitäten oder auch zusätzliche Träger) notwendig wären. Die Rahmenstruktur dient zum einen als Unterlage für die Dekorschicht, zum anderen kann die Rahmenstruktur (etwa über Bohrungen, die vorzugsweise mit verstärkenden Buchsen versehen sind) direkt mit dem Kraftfahrzeug verbunden werden, beispielsweise mit den A-Säulen des Kraftfahrzeugs. Hierdurch erreicht die Instrumententafel dann auch eine tragende Funktion und es kann auf gesonderte Bauteile zur Stärkung der Stabilität (beispielsweise einen durchgehenden Querträger (cross car beam) verzichtet werden. Um diese Funktionen zu erfüllen, ist die Rahmenstruktur aus einem relativ stabilen Kunststoff aufgebaut, der ein Biegeelastizitätsmodul von vorzugsweise zwischen 2000 und 3500 N/mm² beträgt. Dies kann beispielsweise ein Polypropylen mit einem Langglasfaserzuschlag sein.

[Im Folgenden geben wir den Text der "Notanmeldung" fast vollständig wieder. Dies führt sicherlich dazu, dass die Anmeldung etwas länger wird und hier auch Wiederholungen auftreten. Dies ist allerdings durchaus gewollt, da hierdurch die ursprüngliche Offenbarung erhalten bleibt und hierdurch im späteren Verfahren Rückbezüge auf diese ursprüngliche Offenbarung leichter möglich sind.]

Die Erfindung kann Anwendung finden in Instrumententafeln mit einer aus linienförmigen Elementen aufgebaute Rahmenstruktur, wobei von linienförmigen Elementen begrenzte Bereiche der Rahmenstruktur zumindest bereichsweise mit Kunststoffplattenelementen verschlossen sind und wobei die Kunststoffplattenelemente mit den linienförmigen Elementen stoffschlüssig verbunden sind.

Die Kunststoffplattenelemente werden also durch eine Struktur linienförmiger Elemente getragen. Die Rahmenstruktur wird hierbei so berechnet, dass die auf die Instrumententafel einwirkenden Kräfte hauptsächlich durch deren geeignete Struktur aufgefangen werden. Hierzu tragen selbstverständlich auch die Kunststoffplattenelemente bei, welche auch zu einer Versteifung der Instrumententafel beitragen, da sie in ihren Randbereichen mit den linienförmigen Elementen stoffschlüssig verbunden sind.

Unter stoffschlüssiger Verbindung ist hierbei primär ein Umschmelzen bzw. Anschmelzen von flüssigem Kunststoff an die linienförmigen Elemente gemeint. Alternativ sind unter der stoffschlüssigen Verbindung allerdings auch z.B. Schweißverfahren bzw. weitere Verfahren der "chemischen Verschmelzung", etwa mit Kunststoffharzen gemeint. Die Kunststoffplattenelemente werden hierbei vorzugsweise in einem Spritzgussverfahren als flüssiger Kunststoff in ein entsprechendes Formwerkzeug eingebracht, in welchem die linienförmigen Elemente bereitgestellt sind.

Als Materialien für die linienförmigen Elemente kommen vielfältige Materialien in Betracht. Bevorzugt ist, dass die linienförmigen Elemente aus demselben Material bestehen wie die dazwischen liegenden Kunststoffplattenelemente, damit beide in einem einzigen Spritzguss - bzw. Prägeprozess herstellbar sind. Zur Erhöhung der Stabilität weisen die linienförmigen Elemente aber vorzugsweise noch eine Versteifungsstruktur auf, beispielsweise in Form von Verrippungen, insbesondere Kreuzverrippungen. Eingelegte linienförmige Elemente können aber auch aus Metallblech, etwa Stahlblech, gelochtem Metallblech oder z.B. aus Aluminium oder Magnesium bestehen. Selbstverständlich ist es aber auch möglich, Fasermaterialien vorzusehen. Es können hierbei prinzipiell streifenförmige Gewebe bzw. Gewirke eingesetzt werden, welche erst im Umspritzungsvorgang ihre volle Festigkeit entfalten. Es ist auch möglich, dass die linienförmigen Elemente aus Endlosfasern verbaut werden. Dies sind z.B. Rohre aus Endlosfasern, als Grundfasern kommen hier Glasfasern oder auch Kohlefasern zur Anwendung, welche z.B. bereits vor dem Verspritzen mit einem thermoplastischen Kunststoff gebunden sind. Durch das anschließende Umspritzen mit dem Kunststoff, welche die späteren Kunststoffplattenelemente bildet, ergibt sich eine besonders gute Verschmelzung dieser linienförmigen Elemente in der Gesamtstruktur.

Die Trägerstruktur kann aus einem thermoplastischen Kunststoff gebildet sind, z.B. aus PP30LGF, einem Polypropylen-Werkstoff, welcher Langfaseranteile besitzt. Diese Langfaserteile sind Glasfasern, beim erfindungsgemäßen Spritzgussverfahren haben diese Glasfasern vorzugsweise eine Länge von 10 mm, bei dem erfindungsgemäßen Pressverfahren vorzugsweise eine Länge von 25 mm. Alternative Kunststoffe hierzu sind z.B. Polyamide PA, ABS, PC, ABS/PC, Polyinide, PEEK, PEU, PPS, PEI, PSU, PESU, PPSU und PTFE. Selbstverständlich sind auch andere Kunststoffe, etwa duroplastische Kunststoffe möglich. Eine ausführliche Schilderung solcher selbsttragenden Instrumentenpanels findet sich in der WO 2004/050409 A1, deren Offenbarungsgehalt bezüglich der darin gezeigten Trägerstruktur hiermit vollständig in die vorliegende Anmeldung übernommen wird.

Die vorliegende Erfindung betrifft eine Aufnahme für Bedien- und Anzeigegeräte vorzugsweise in der Mittelkonsole einer Instrumententafel, z.B. in dieser Mittelkonsole sind ein oder mehrere Öffnungen vorhanden, in welchen beispielsweise Anzeige- und Bedienelemente oder Geräte untergebracht werden können. So kann hier zum Beispiel ein Autoradio oder eine Klimaanlage eingebaut werden.

In dieser Öffnung ist ein Halteelement (im Folgenden werden die Begriffe "Halterung" und "Halteelement" synonym gebraucht), eine so genannte Center Verstärkung, angeordnet, welche die Instrumente bzw. Geräte hinter der Instrumententafel trägt. Erfindungsgemäß ist diese Halterung nun Bestandteil der Rahmenstruktur der Instrumententafel. Da die Ausführung der Center Verstärkung als separates Bauteil zu höheren Bauteilkosten führt, können hierdurch Kosten gespart werden. Es wird also die Center Verstärkung in den Instrumententafelträger integriert. Durch die schon verstärkte Struktur des selbsttragenden Instrumentenpanels (INPAMO) reicht es, Geräteaufnahmepunkte zu integrieren.

Die Mittelkonsole kann durch die linienförmigen Elemente in vertikaler und horizontaler Richtung verstärkt sein. Hierdurch wird die Festigkeit der Struktur erhöht.

Die Halterung bzw. Center-Verstärkung für die Instrumente kann als tragende Struktur ausgebildet sein, die sich hinter der Öffnung der Instrumententafel nach hinten von der Instrumententafel weg erstreckt. Hierin werden die Geräte gehalten und verschließen mit ihrer Front die Öffnung. Hinten werden sie, je nach Ausführungsform, von der Halterung gehalten.

Die Halterung kann als nach vorne, zur Öffnung der Instrumententafel hin offene Kiste ausgebildet sein.

Die Halterung kann auch als tragendes Gestell ausgeführt sein. So kann das Gestell Streben aufweisen, die Kanten eines Quaders bilden. Diese Streben können durch weitere, beispielsweise diagonale, Streben verstärkt sein. Alle Streben können hier aus den Materialien der Gesamtkonstruktion, insbesondere aus dem Material der Kunststoffplatten und dem Material der linienförmigen Elemente hergestellt sein.

In der Halterung können Rastungen bzw. Geräteaufnahmepunkte angeordnet sein, die die Instrumente halten und/oder unterstützen. Haltende Elemente, Rastungen oder Geräteaufnahmepunkte können als flächige Elemente ausgebildet sein, die mit einer Kante ihrer Fläche an einer Strebe der Halterung befestigt sind und ansonsten nicht mit der Halterung verbunden sind, so dass sie um die befestigte Kante (z.B. um eine Rastung zu erlauben) leicht biegbar sind. Die haltenden Elemente, Rastungen oder Geräteaufnahmepunkte können zum Beispiel dreieckig ausgeführt sein und mit einer der Kanten des Dreiecks an der Halterung angebracht sein. Insbesondere können die Rastungen und Geräteaufnahmepunkte auch in das Volumen des durch die Halterung beschriebenen Quaders hineinragen. Werden nun Instrumente in die Halterung eingeschoben, so drücken diese die Rastungen und Geräteaufnahmepunkte auseinander und werden von diesen gehalten. Auch für die Rastungen und Geräteaufnahmepunkte ist eine stoffschlüssige Verbindung bevorzugt.

Bilden die Streben der Halterung die Kanten eines Quaders, so können je ein oder zwei Rastungen oder haltenden Elemente auf einer, mehreren oder allen der Flächen des Quaders angeordnet sein.

Wie beschrieben, ist die Halterung integraler Bestandteil der Instrumententafel verbunden. Um den optischen Eindruck der Instrumententafel zu verbessern ist es bevorzugt, wenn der Rand der Öffnung so gestaltet ist, dass sich bei eingesetzten Geräten und Instrumenten ein möglichst nahtloser Übergang zu den Geräten oder Instrumenten ergibt. Dies kann dadurch bewirkt werden, dass eine auf der Instrumententafel angeordnete Dekor-Schicht um die Kanten der Öffnung herumgeführt wird, so dass sie sich über eine bestimmte Tiefe in die Öffnung, möglicherweise auch in die Halterung, fortsetzt. Das optische Ergebnis kann weiter verbessert werden, wenn die Instrumententafel um die Öffnung herum ein Stück zurückgesetzt wird, so dass die Öffnung von einem etwas nach innen versetzen Rahmen umgeben wird. Eine solche Zurücksetzung kann auch Teile von Geräten aufnehmen, die, wie beispielsweise die Bedienfläche, etwas am Rand über den Hauptkörper hinausragen. Auf der Oberfläche der Instrumententafel ergibt sich dann eine im Wesentlichen glatte Oberfläche.

Vorteilhaft ist außerdem, dass kein Zwischenrahmen zwischen Gerät und einer Tragestruktur der Instrumententafel mehr erforderlich ist, der einerseits teuer ist und außerdem zusätzlichen Montageaufwand verursacht. Das Trägermaterial, in das beispielsweise eine Bedieneinheit eingeschoben werden kann, ist an anderen Stellen direkt mit Dekormaterial (z.B. hinterschäumte Slushhaut) belegbar. Vorteile ergeben sich hierbei beispielsweise beim Fugenbild. Es können sich außerdem noch Bereiche ergeben in denen durch Schieber die Schaumführung auf vorteilhafte Weise gesteuert werden könnte.

Vorteile der Erfindung sind die bessere Montage und ein besseres Schwingungsverhalten. Vorteilhaft ist außerdem, dass in der Mittelkonsole ein Rahmen zum Einschieben bzw. Einclipsen von Instrumenten vorgesehen werden könnte, so dass kein Zwischenraum bzw. zwischengeschaltetes Bauteil hier mehr erforderlich ist, der einerseits teuer ist und außerdem zusätzlichen Montageaufwand verursacht.

Im Folgenden soll die erfindungsgemäße Instrumententafel anhand zweier beispielhafter Figuren näher erläutert werden.

Es zeigt
- Fign. 1a bis 1c: Ansichten und Schnitte einer ersten Ausführungsform einer Instrumententafel,
- Fign. 2a und 2b: Ansicht und Schnitt einer zweiten Ausführungsform einer Instrumententafel, und
- Fig. 3: eine perspektivische Ansicht einer dritten Ausführungsform einer Instrumententafel.

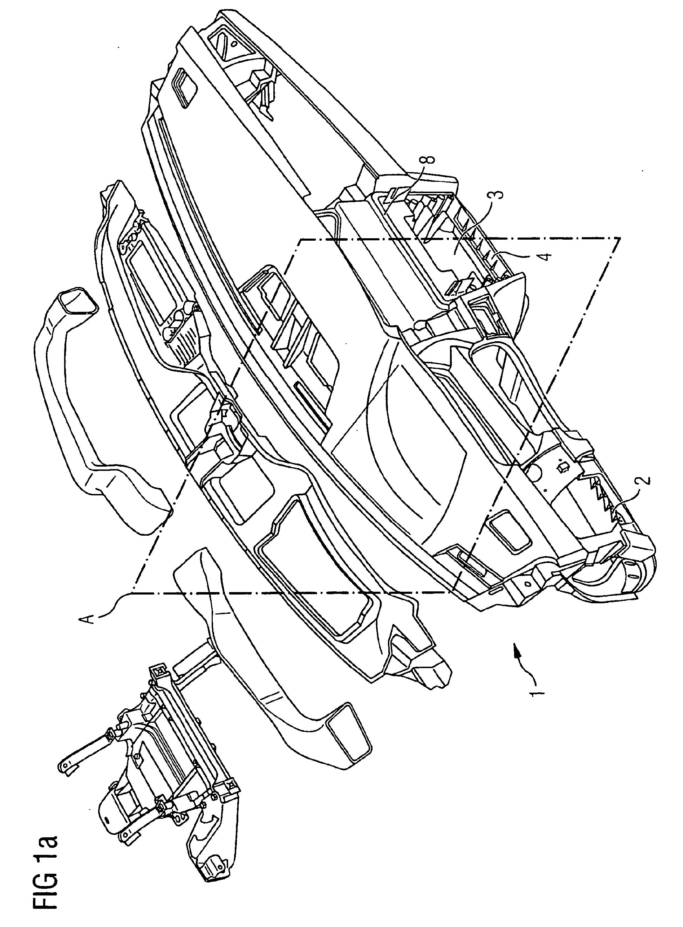

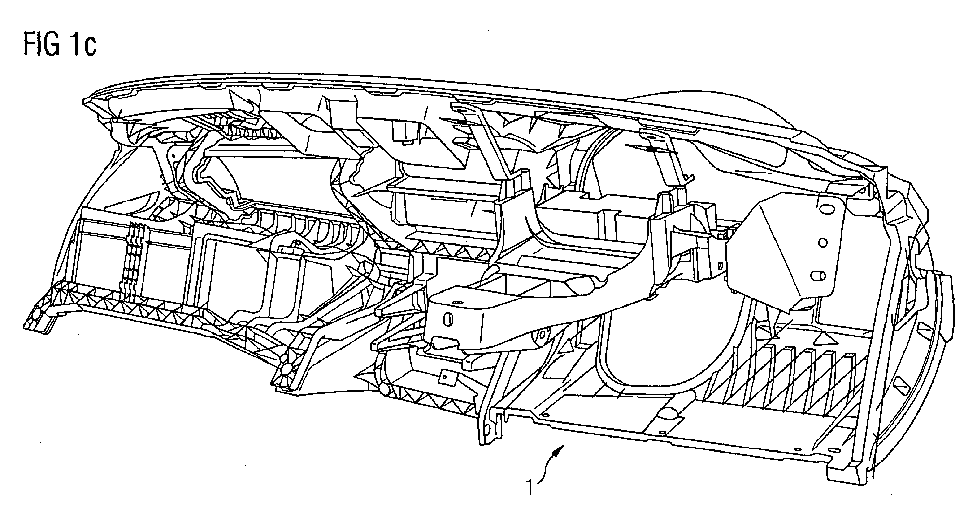

Fig. 1a zeigt eine erste Ausführungsform einer erfindungsgemäßen Instrumententafel 1. Diese zeigt eine Rahmenstruktur 2, die überwiegend, vor allem in ihrem oberen Bereich, mit einer Dekorschicht 8 sichtseitig versehen ist. Unter "sichtseitig" ist die Seite gemeint, die einem späteren Kraftfahrzeuginnenraum zugeordnet sein wird. Linksseitig sind in Fig. 1a noch angeprägte Lüftungskanäle bzw. Halterungen für Airbagmodule gezeigt sowie eine Lenksäulenhalterung (ganz links oben).

Die Rahmenstruktur enthält ein Halteelement 4 zum Einführen elektronischer Geräte, wie beispielsweise einem Autoradio, einem Navigationsgerät etc. Das Halteelement 4 weist eine zentrale Öffnung 3 auf.

Die Rahmenstruktur wurde in einem Spritzgussverfahren erzeugt, wobei das rahmenförmige Halteelement hier integral mit erzeugt wurde. Anschließend wurde die Rahmenstruktur 2 mit einer Slush-Haut in ein Werkzeug eingelegt und der Zwischenraum zwischen Slush-Haut und Rahmenstruktur wurde durch Isocyanat und Polyol aufgeschäumt, so dass sich die in Fig. 1a zu sehende, mit einer Dekorschicht 8 belegte Rahmenstruktur 2 ergab. Die Dekorschicht 8 geht hierbei nicht ganz bis zum Rand der Öffnung 3. Die Dekorschicht geht allerdings so weit, dass ein später einzusetzendes Gerät die Dekorschicht im Randbereich zumindest abschnittsweise überlappt, um somit sichtseitig vom Fahrzeuginnenraum aus keine unbelegten Teile der Rahmenstruktur in diesem Bereich sichtbar zu lassen. Die Rahmenstruktur 2 ist als Rahmenstruktur mit linienförmigen Elementen aufgebaut, wobei die linienförmigen Elemente bereichsweise mit Kunststoffplattenelementen 12 verschlossen sind. Insofern handelt es sich hier um eine Rahmenstruktur, wie sie in Fig. 3 veranschaulicht ist. Hierbei sind die linienförmigen Elemente und die Kunststoffplattenelemente aus demselben Kunststoff gefertigt (Polypropylen 30 mit Langglasfaserzuschlag, dieses Material hat einen Biegeelastizitätsmodul im Bereich zwischen 2500 und 3500 N/mm²). Die Rahmenstruktur 2 weist auf ihrer dem Kraftfahrzeuginnenraum abgewandten Seite Versteifungsrippen auf (dies in Fig. 3 durch eine "Röntgensicht" angedeutet).

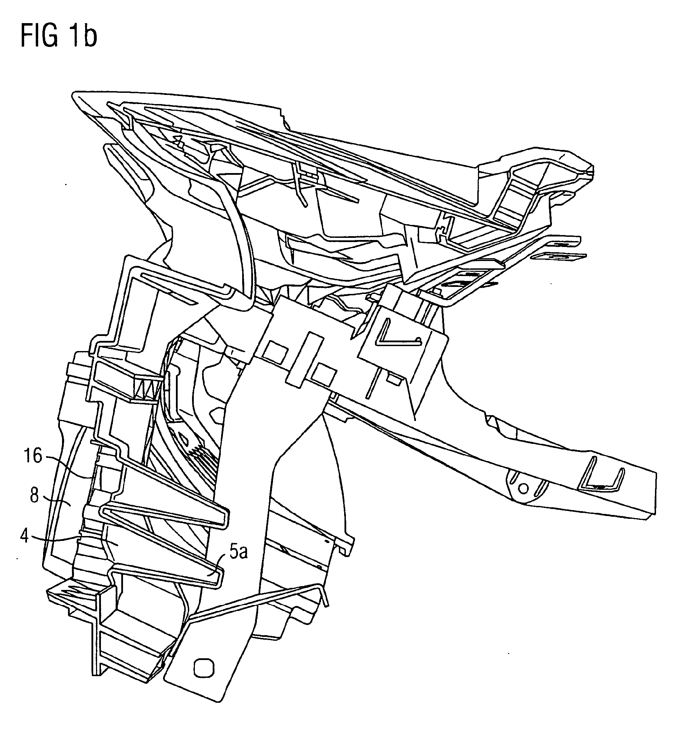

Fig. 1b zeigt einen Schnitt durch die Instrumententafel nach Fig. 1a gemäß Schnittebene A (siehe Fig. 1a). Gezeigt ist hier die Draufsicht von rechts, also auf den fahrerseitigen Bereich.

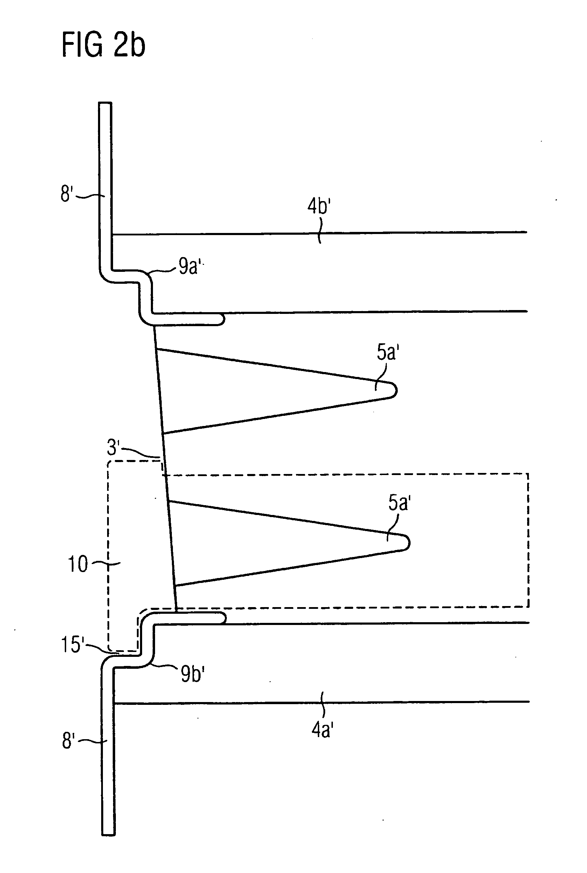

Fig. 1b zeigt im Detail zwei im Wesentlichen dreieckförmige Elemente, die jeweils als Einschubfächer für elektronische Geräte dienen. Elektronische Geräte, entweder im Einfach-DIN- oder Doppel-DIN-Schachtformat können hier eingeschoben werden, wobei keine zwischengeschalteten Elemente, wie z.B. Zwischenrahmen notwendig sind. Die Geräte werden in das rahmenförmige Halteelement 4 eingeschoben, wobei eine Anschlusskante 16 gegeben ist, an der ein im Bereich der Blende des Geräts seitlich herausstehender Abschnitt anstößt (dies ist auch besonders gut in Fig. 2b zu sehen, das dortige Gerät ist durch das Bezugszeichen 10 veranschaulicht). Das Halteelement weist vorliegend Rastungen auf, so dass das Gerät ohne zusätzliche Fixiermittel in dem dreieckförmigen Element 5a bzw. dem Halteelement 4 fixierbar ist. Die dreieckförmigen Elemente weisen zum Gerät hin hierbei einen umlaufenden Rand auf, der aus einer im Wesentlichen dreieckförmigen Grundfläche heraussteht. Durch diese umlaufende Randverstärkung ergibt sich eine erhebliche Versteifung der dreieckförmigen Elemente 5a. Trotzdem weisen diese eine leichte Elastizität auf, dass es beispielsweise möglich ist, auf der Dreieckfläche zu einem Gerät 10 hin eine Rastnase einzubringen, die durch Passieren einer korrespondierenden Rastzunge am Gerät 10 seitlich nach außen geschoben wird und danach einschnappt, um das Gerät 10 entsprechend zu fixieren. Es sind jedoch auch andere Rastungsmöglichkeiten gegeben, auch kann zusätzlich durch Schrauben fixiert werden, falls eine besonders häufige Entnehmbarkeit der Geräte gewünscht ist.

Fig. 1b zeigt außerdem, dass die Dekorschicht im Bereich um das Halteelement 4 umgewinkelt ist. Ebenso ist zu sehen, dass das Halteelement gegenüber der dem Kraftfahrzeuginnenraum zuordenbaren Front der Instrumententafel zurückversetzt ist.

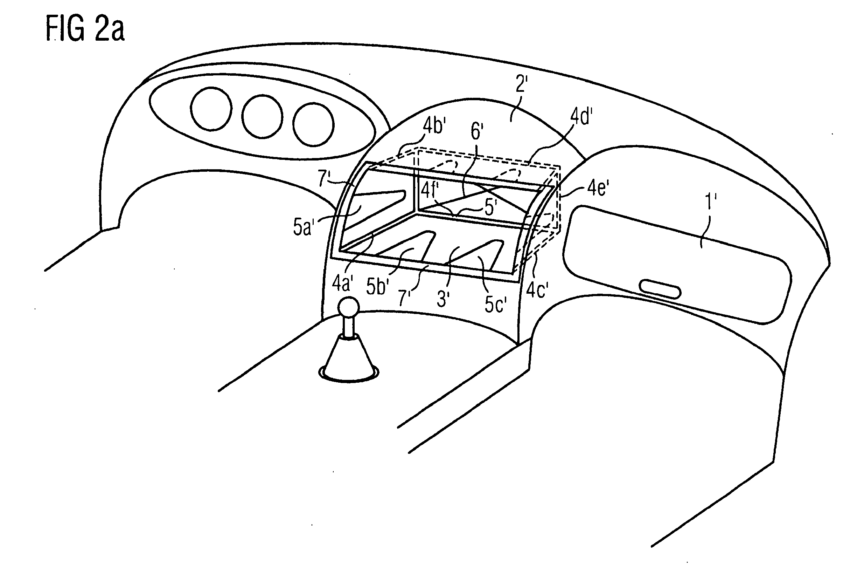

Fig. 2a zeigt eine Instrumententafel 1" in der Gesamtansicht. In der Mittelkonsole 2" ist hier eine rechteckige Öffnung 3" vorgesehen, in die Instrumente und Geräte eingesetzt werden können. Hinter der Öffnung findet sich die erfindungsgemäße Center Verstärkung 4a' bis 4f' und 5a' bis 5c'. Diese Halterung 4a' bis 4f' und 5a' bis 5c' weist im vorliegenden Fall Streben 4a' bis 4f' an den Kanten eines Quaders auf. Durch diese Streben werden eingesetzte Geräte gehalten. Zur zusätzlichen Unterstützung der Geräte finden sich auf den Flächenbereichen des Quaders Geräteaufnahmepunkte 5a' bis 5c' oder Rastungen 5a' bis 5c'. Im gezeigten Fall sind sie im Wesentlichen dreieckig ausgeführt und mit einer Seite des Dreiecks an der Vorderseite 7' der Öffnung 3' stoffschlüssig befestigt.

Darüber hinaus weist die Halterung 5' zur zusätzlichen Verstärkung Streben 6' auf, die hier diagonal zwischen den Kanten 4e' und 4d' des Quaders gespannt sind.

Fig. 2b zeigt einen Querschnitt durch die Öffnung 3' der erfindungsgemäßen Halterung. Die Öffnung 3' ist weist hier Stufen 9a' und 9b' auf, über welche das Dekor 8' sich bis auf die Halterung 4a' und 4b' erstreckt. Hierdurch wird ein glattes Äußeres ohne wesentliche Stufen erzielt. Zu sehen ist hier ein elektronisches Gerät 10, vorliegend ein Autoradio im Einfach-DIN-Schacht-Format, die Größenabmaße des im Wesentlichen quaderförmigen Geräts, das im Bereich der Bedienblende eine Verbreiterung zeigt, ist durch eine Strichlinie angedeutet. Das Gerät 10 ist über Rastungen in dem dreiecksförmigen Element 5a' eingerastet. Zwischen Gerät 10 und Dekorschicht 8' ist eine Fuge gleichbleibender Größe zu sehen, die mit dem Bezugszeichen 15' bezeichnet ist.

Fig. 3 zeigt eine Rahmenstruktur in der "Röntgenansicht". Die linienförmigen Elemente 11 weisen eigentlich nur auf ihrer dem Fahrzeuginnenraum 13 abgewandten Seite eine Verrippung bzw. Kreuzverrippung auf. Zwischen diesen linienförmigen Elementen sind Kunststoffplattenelemente 12 angeordnet. Die in Fig. 3 gezeigte Rahmenstruktur weist zum einen eine integrierte Centerverstärkung bzw. ein Halteelement 4 auf, außerdem ist hier eine Aufnahme auf ein Head-up-Display 15 gezeigt, dieses kann einen entsprechenden Aufnahmerahmen aufweisen.

Die in Fig. 3 gezeigte Rahmenstruktur ist derart stabil, dass auf einen durchgehenden Querträger zwischen den A-Säulen 14 des Kraftfahrzeugs verzichtet werden kann.

## Patentansprüche

1. Verfahren zum Herstellen einer Instrumententafel (1), wobei
a) eine Rahmenstruktur (2) in einem einzigen Spritzgussprozess erzeugt wird und diese Rahmenstruktur linienförmige Elemente (11) aufweist, die bereichsweise mit Kunststoffplattenelementen (12) verschlossen und stoffschlüssig verbunden sind und
die linienförmigen Elemente (11) auf ihrer einem späteren Kraftfahrzeuginnenraum (13) abgewandten Seite Versteifungsrippen aufweisen und
die Rahmenstruktur zumindest ein rahmenförmiges Halteelement (4) enthält und dieses rahmenförmige Halteelement eine Öffnung (3) zur Aufnahme von einsetzbaren elektronischen Geräten (10) aufweist und
b) das elektronische Gerät (10) in das rahmenförmige Halteelement (4) eingesetzt wird.

2. Verfahren nach Anspruch 1, **dadurch gekennzeichnet, dass** die linienförmigen Elemente (11) einen Kern aus Metall oder faserförmigem Material aufweisen.

3. Verfahren nach Anspruch 1 oder 2, **dadurch gekennzeichnet, dass** das Gerät (10) ein Autoradio, ein Navigationsgerät oder ein Head-up-Display ist.

4. Verfahren nach einem der vorhergehenden Ansprüche, **dadurch gekennzeichnet, dass** vor dem Einsetzen des elektronischen Geräts (10) die Rahmenstruktur (2) mit einer Dekorschicht belegt wird.

5. Verfahren nach Anspruch 4, **dadurch gekennzeichnet, dass** die Dekorschicht (8) aus Leder oder Kunststoff ist.

6. Verfahren nach Anspruch 5, **dadurch gekennzeichnet, dass** die Verbindungen der Dekorschicht (8) mit der Rahmenstruktur (2) durch Verkleben oder Verschäumen erfolgt.

7. Verfahren nach einem der Ansprüche 4 bis 6, **dadurch gekennzeichnet, dass** das elektronische Gerät (10) so eingesetzt wird, dass es randseitig die Dekorschicht (8) abschnittsweise überdeckt.

8. Verfahren nach einem der vorhergehenden Ansprüche, **dadurch gekennzeichnet, dass** zur Herstellung der Rahmenstruktur (2) ein Kunststoff verwendet wird, dessen Biege-Elastizitätsmodul zwischen 2000 und 3500 N/mm² beträgt.

9. Instrumententafel (1) mit einer Rahmenstruktur (2), die in einem Spritzgussprozess erzeugt ist und die zumindest ein rahmenförmiges Halteelement enthält und dieses rahmenförmige Halteelement (4) eine Offnung (3) ur Aufnahme von einsetzbaren elektronischen Geräten (10) aufweist und das elektronische Gerät in das rahmenförmige Halteelement eingesetzt ist,
**dadurch gekennzeichnet,**
**daß** die Rahmenstruktur in einem einzigen Spritzgussprozess erzeugt ist und diese Rahmenstruktur linienförmige Elemente (11) aufweist, die die bereichsweise mit Kunststoffplattenelementen (12) verschlossen und stoffschlüssig verbunden sind und die linienförmigen Elemente auf ihrer einem späteren Kraftfahrzeuginnenraum abgewandten Seite Versteifungsrippen aufweisen

10. Instrumententafel (1) nach Anspruch 9, **dadurch gekennzeichnet, dass** einerseits die Rahmenstruktur (2) der Instrumententafel unmittelbar mit einer Dekorschicht (8) durch Verkleben oder Beschäumen verbunden ist und die Rahmenstruktur andererseits unmittelbar mit dem Kraftfahrzeug (14) verbindbar ist und die Stabilität der Rahmenstruktur (2) der Instrumententafel (1) derart gestaltet ist, dass ein gesonderter, über die gesamte Fahrzeugbreite eines Kraftfahrzeugs (14) verlaufender Querträger verzichtbar ist.

11. Instrumententafel nach einem der Ansprüche 9 oder 10, **dadurch gekennzeichnet, dass** das Halteelement (4) gegenüber der einem Kraftfahrzeuginnenraum (13) zuordenbaren Front der Instrumententafel (1) zurückversetzt ist.

12. Instrumententafel nach Anspruch 9, **dadurch gekennzeichnet, dass** die Dekorschicht (8) im Umgebungsbereich des Geräts umgewinkelt ist.

13. Instrumententafel nach einem der Ansprüche 9 oder 12, **dadurch gekennzeichnet, dass** zwischen Gerät (10) und Halteelement (4) kein Zwischenrahmen vorgesehen ist.

## Claims

1. Method for producing an instrument panel (1), wherein
a) a frame structure (2) is produced in single injection-moulding process and this frame structure has linear elements (11) which are closed in regions by plastic plate elements (12) and connected in a materially joined manner thereto and
the linear elements (11) have reinforcing ribs on their side facing away from a subsequent motor vehicle passenger compartment (13) and
the frame structure includes at least one frame-like holding element (4) and this frame-like holding element has an opening (3) for receiving insertable electronic devices (10) and
b) the electronic device (10) is inserted into the frame-like holding element (4).

2. Method according to Claim 1, **characterised in that** the linear elements (11) have a core made of metal or fibrous material.

3. Method according to Claim 1 or 2, **characterised in that** the device (10) is a car radio, a navigation device or a head-up display.

4. Method according to one of the preceding claims, **characterised in that** the frame structure (2) is covered with a decorative layer before the insertion of the electronic device (10).

5. Method according to Claim 4, **characterised in that** the decorative layer (8) is made of leather or plastic.

6. Method according to Claim 5, **characterised in that** the decorative layer (8) is connected to the frame structure (2) by adhesive bonding or foaming.

7. Method according to one of Claims 4 to 6, **characterised in that** the electronic device (10) is inserted in such a manner that it overlaps sections of the decorative layer (8) at the edge.

8. Method according to one of the preceding claims, **characterised in that** a plastic with a flexural modulus of elasticity of between 2000 and 3500 N/mm² is used to produce the frame structure (2).

9. Instrument panel (1) having a frame structure (2) which is produced in an injection-moulding process and which includes at least one frame-like holding element and this frame-like holding element (4) has an opening (3) for receiving insertable electronic devices (10) and the electronic device is inserted into the frame-like holding element,
**characterised**
**in that** the frame structure is produced in single injection-moulding process and this frame structure has linear elements (11) which are closed in regions by plastic plate elements (12) and connected in a materially joined manner thereto and the linear elements have reinforcing ribs on their side facing away from a subsequent motor vehicle passenger compartment.

10. Instrument panel (1) according to Claim 9, **characterised in that**, on the one hand, the frame structure (2) of the instrument panel is directly connected to a decorative layer (8) by adhesive bonding or foaming and, on the other hand, the frame structure is directly connected to the motor vehicle (14) and the stability of the frame structure (2) of the instrument panel (1) is designed such that a separate cross-member running over the entire vehicle width of a motor vehicle (14) can be dispensed with.

11. Instrument panel according to one of Claim 9 or 10, **characterised in that** the holding element (4) is set back from the front, assignable to a motor vehicle passenger compartment (13), of the instrument panel (1).

12. Instrument panel according to Claim 9, **characterised in that** the decorative layer (8) is angled in the surrounding region of the device.

13. Instrument panel according to one of Claim 9 or 12, **characterised in that** no intermediate frame is provided between the device (10) and the holding element (4).

## Revendications

1. Procédé de fabrication d'un tableau de bord (1), dans lequel :
a) une structure de cadre (2) est produite au cours d'un unique processus de moulage par injection et cette structure de cadre présente des éléments linéaires (11), qui sont obturés, par zones, par des éléments de plaque en matériau synthétique (12) et sont reliés par assemblage matériel, et
les éléments linéaires (11) présentent des nervures de renfort sur leur côté opposé à un futur habitacle (13) de véhicule automobile et la structure de cadre contient au moins un élément de retenue (4) en forme de cadre et cet élément de retenue en forme de cadre présente une ouverture (3) pour recevoir des appareils électroniques insérables (10), et
b) l'appareil électronique (10) est inséré dans l'élément de retenue (4) en forme de cadre.

2. Procédé selon la revendication 1, **caractérisé en ce que** les éléments linéaires (11) présentent un noyau constitué de métal ou d'un matériau fibreux.

3. Procédé selon la revendication 1 ou 2, **caractérisé en ce que** l'appareil (10) est un autoradio, un système de navigation GPS ou un affichage tête haute (Head-Up-Display).

4. Procédé selon l'une quelconque des revendications précédentes, **caractérisé en ce qu'**avant l'insertion de l'appareil électronique (10), la structure de cadre (2) est revêtue d'une couche décorative.

5. Procédé selon la revendication 4, **caractérisé en ce que** la couche décorative (8) est en cuir ou en matériau synthétique.

6. Procédé selon la revendication 5, **caractérisé en ce que** les liaisons entre la couche décorative (8) et la structure de cadre (2) se font par application de colle ou de mousse.

7. Procédé selon l'une quelconque des revendications 4 à 6, **caractérisé en ce que** l'appareil électronique (10) est inséré de sorte qu'il recouvre côté bord, par zones, la couche décorative (8).

8. Procédé selon l'une quelconque des revendications précédentes, **caractérisé en ce que**, pour fabriquer la structure de cadre (2), on utilise un matériau synthétique dont le module d'élasticité à la flexion est compris entre 2000 et 3500 N/mm².

9. Tableau de bord (1) avec une structure de cadre (2) qui est produite selon un procédé de moulage par injection et qui contient au moins un élément de retenue en forme de cadre et cet élément de retenue (4) en forme de cadre présente une ouverture (3) pour recevoir des appareils électroniques insérables (10) et l'appareil électronique est inséré dans l'élément de retenue en forme de cadre,
**caractérisé en ce que**
la structure de cadre est produite au cours d'un unique processus de moulage par injection et cette structure de cadre présente des éléments linéaires (11), qui sont obturés, par zones, par des éléments de plaque en matériau synthétique (12) et sont reliés par assemblage matériel et **en ce que** les éléments linéaires présentent des nervures de renfort sur leur côté opposé à un futur habitacle de véhicule automobile.

10. Tableau de bord (1) selon la revendication 9, **caractérisé en ce que** la structure de cadre (2) du tableau de bord est reliée, d'une part, directement à une couche décorative (8) par application de colle ou de mousse et la structure de cadre peut être reliée, d'autre part, directement au véhicule automobile (14) et **en ce que** la stabilité de la structure de cadre (2) du tableau de bord (1) est conçue de manière à pouvoir renoncer à une traverse séparée s'étendant sur toute la largeur d'un véhicule automobile (14).

11. Tableau de bord selon l'une quelconque des revendications 9 ou 10, **caractérisé en ce que** l'élément de retenue (4) est en retrait par rapport à l'avant du tableau de bord (1) qui peut être affecté à un habitacle de véhicule automobile (13).

12. Tableau de bord selon la revendication 9, **caractérisé en ce que** la couche décorative (8) est rehaussée dans la zone environnante de l'appareil électronique.

13. Tableau de bord selon l'une quelconque des revendications 9 ou 12, **caractérisé en ce que** l'on ne prévoit aucun cadre intermédiaire entre l'appareil électronique (10) et l'élément de retenue (4).
